# FASCICULE DE BREVET EUROPEEN

(11) **EP 2 112 024 B1**
(45) Date de publication et mention de la délivrance du brevet: **31.12.2014**
(21) Numéro de dépôt: 09157633.0
(22) Date de dépôt: 08.04.2009
(51) Int. Cl.: B60R 7/04, B60R 7/02, B60R 11/00

(54) **Dispositif de rangement rotatif et amovible pour une partie supérieure d'une structure de véhicule automobile, et procédé d'assemblage correspondant**
Schwenkbare und abnehmbare Staufachvorrichtung für einen oberen Bereich einer Kraftfahrzeugstruktur, und zugehöriges Montageverfahren
Pivotable and removable storage device for an upper area of an automobile structure, and corresponding assembly method

(30) Priorité: 23.04.2008 FR 0852733
(43) Date de publication de la demande: 28.10.2009
(73) Titulaire: PEUGEOT CITROËN AUTOMOBILES S.A., 78140 Vélizy Villacoublay (FR)
(72) Inventeur: Reau, Christine, 78500, SARTROUVILLE (FR); Villa, Laurent, 91460, MARCOUSSIS (FR)

(56) Documents cités:
- FR-A- 2 872 114
- US-A- 5 829 813
- US-A- 6 125 030
- US-A1- 2003 184 111

## Description

L'invention concerne les dispositifs de rangement qui équipent certains véhicules automobiles.

De plus en plus de véhicules automobiles comportent des dispositifs de rangement à l'intérieur de leur habitacle. Certains de ces dispositifs de rangement sont astucieusement intégrés dans (ou sous) des équipements voire même dans la structure (ou caisse) du véhicule automobile, si bien qu'ils ne constituent pas des obstacles pour des objets embarqués.

Mais, certains autres dispositifs de rangement sont implantés dans des zones de véhicules automobiles dont le volume de rangement est modulable, comme par exemple la partie supérieure de leur structure (ou caisse). C'est notamment le cas du dispositif de rangement décrit dans le document brevet FR 2796606. Ces dispositifs de rangement étant généralement implantés fixement, et donc inamovibles par les usagers, ils peuvent parfois constituer des obstacles qui limitent la capacité de chargement, voire même interdisent le transport de certains objets encombrants ou volumineux.

Il a certes été proposé dans le document brevet FR 2669589 un caisson amovible destiné à être installé à la place d'un toit ouvrant de véhicule automobile et disposant de portes d'accès externe et interne rotatives. Mais, lorsque l'on veut utiliser le volume qu'il occupe dans l'habitacle, il doit être démonté puis remplacé par le toit ouvrant correspondant, ce qui nécessite que ce dernier soit présent là où s'opère le remplacement, ce qui n'est pas toujours le cas.

Un dispositif de rangement selon le préambule de la revendication 1 et un procédé d'assemblage selon le préambule de la revendication 10 sont connus du document brevet FR 2 872 114 A1.

L'invention a donc pour but d'améliorer la situation en permettant notamment une démontabilité rapide en cas de besoin de modularité.

Elle propose à cet effet un dispositif de rangement, pour une structure de véhicule automobile, comprenant :
- deux éléments de support propres à être solidarisés de façon amovible à une partie d'une plaque de toit, solidarisée à une partie supérieure de la structure, et comprenant chacun un logement transversal adapté, et
- un capot définissant un bac de réception et muni de deux axes transversaux opposés l'un à l'autre suivant une même direction et propres à être logés, de façon amovible, respectivement dans les logements transversaux, de manière à permettre l'entraînement en rotation du capot par rapport à la plaque de toit,
caractérisé en ce que chaque élément de support comprend un logement transversal adapté présentant une forme partiellement spiralée.

Le dispositif selon l'invention peut comporter d'autres caractéristiques qui peuvent être prises séparément ou en combinaison, et notamment :
- il peut comprendre des premiers moyens d'immobilisation, propres à être solidarisés à la structure, et des seconds moyens d'immobilisation situés dans une partie avant du capot et propres à prendre une première position, dans laquelle ils peuvent coopérer avec les premiers moyens d'immobilisation pour immobiliser le capot dans une position fermée interdisant l'accès à l'espace interne qu'il délimite, et une seconde position, dans laquelle ils ne coopèrent pas avec les premiers moyens d'immobilisation, permettant ainsi l'entraînement en rotation du capot en vue d'accéder à son espace interne ;
- chaque logement transversal adapté peut comprendre une languette agencée pour plaquer l'axe transversal qui s'y trouve logé ;
- le capot peut comprendre une partie arrière munie d'au moins une ouverture propre à permettre un accès à son espace interne via l'intérieur du véhicule automobile ;
   ➢ chaque ouverture peut être couplée à un moyen d'obturation
      - chaque moyen d'obturation peut comprendre une plaque montée dans des glissières transversales afin de pouvoir coulisser transversalement ;
   ➢ il peut comprendre deux ouvertures définies l'une à côté de l'autre suivant la direction transversale et munies de plaques d'obturation montées dans des glissières transversales parallèles afin de pouvoir coulisser transversalement l'une derrière l'autre ;
- il peut comprendre au moins un cordon comportant une première extrémité propre à être solidarisée à la structure et une seconde extrémité propre à être solidarisée au capot, afin de limiter l'entraînement en rotation du capot à un secteur angulaire choisi ;
- il peut comprendre deux carters d'habillage propres à être montés sur la structure afin de cacher respectivement les éléments de support lorsqu'ils supportent le capot.

L'invention propose également un procédé, dédié à l'assemblage d'un dispositif de rangement à une structure de véhicule automobile, et consistant :
i) à solidariser de façon amovible à une partie d'une plaque de toit (solidarisée à une partie supérieure de la structure), deux éléments de support comprenant chacun un logement transversal adapté, puis
ii) à loger de façon amovible dans les logements transversaux deux axes transversaux définis de façon opposée suivant une même direction sur un capot, définissant un bac de réception, de sorte que le capot puisse être entraîné en rotation par rapport à la plaque de toit.
   caractérisé en ce que
iii) le logement des axes transversaux consiste d'abord à les guider dans une première partie en forme d'encoche des logements transversaux, puis à les faire pénétrer dans une seconde partie formant réceptacle des logements transversaux.

Le procédé d'assemblage selon l'invention peut comporter d'autres caractéristiques qui peuvent être prises séparément ou en combinaison, et notamment :
- on peut solidariser à la structure des premiers moyens d'immobilisation propres i) à coopérer avec des seconds moyens d'immobilisation situés dans une partie avant dudit capot pour immobiliser le capot dans une position fermée interdisant l'accès à l'espace interne qu'il délimite, et ii) lorsqu'ils ne coopèrent pas avec les seconds moyens d'immobilisation, à permettre l'entraînement en rotation dudit capot en vue d'accéder à son espace interne ;
- on peut solidariser à la structure une première extrémité d'au moins un cordon et on peut solidariser au capot une seconde extrémité de ce cordon, afin de limiter l'entraînement en rotation du capot à un secteur angulaire choisi ;
- on peut solidariser à la structure deux carters d'habillage destinés à cacher les éléments de support lorsqu'ils supportent le capot.

D'autres caractéristiques et avantages de l'invention apparaîtront à l'examen de la description détaillée ci-après, et des dessins annexés, sur lesquels :
- la figure 1 illustre schématiquement, dans une vue en perspective du dessus, un ensemble de toit solidarisé à une partie supérieure d'une structure de véhicule automobile,
- la figure 2 illustre schématiquement, dans une vue du dessous, l'ensemble de toit de la figure 1 solidarisé à la partie supérieure de la structure du véhicule automobile et après fixation d'un exemple de réalisation d'un dispositif de rangement selon l'invention,
- la figure 3 illustre schématiquement, dans une vue en perspective du dessous, une partie de l'ensemble de toit de la figure 1 avant son assemblage à la structure et avant que des éléments de support d'un dispositif de rangement ne soient solidarisés à sa face interne,
- la figure 4 illustre schématiquement, dans une vue en perspective du dessous, une partie de l'ensemble de toit de la figure 1 après son assemblage à la structure et après que des éléments de support aient été solidarisés à sa face interne,
- la figure 5 illustre schématiquement, dans une vue en coupe longitudinale, un exemple de réalisation d'un élément de support,
- la figure 6 illustre schématiquement, dans une vue en perspective du dessous, une partie d'un exemple de réalisation d'un dispositif de rangement selon l'invention, avant sa solidarisation à l'élément de toit et à la structure du véhicule automobile,
- les figures 7 et 8 illustrent schématiquement, respectivement dans des première et seconde vues en perspective du dessous selon deux angles différents, le dispositif de rangement de la figure 6, une fois solidarisé à l'élément de toit et à la structure du véhicule automobile,
- la figure 9 illustre schématiquement, dans une vue de face, la partie arrière du dispositif de rangement des figures 6 à 8, avant solidarisation à l'élément de toit et à la structure du véhicule automobile,
- la figure 10 illustre schématiquement, dans une vue en coupe longitudinale, la partie arrière du dispositif de rangement des figures 6 à 9, une fois solidarisé à l'élément de toit et à la structure du véhicule automobile,
- la figure 11 illustre schématiquement, dans une vue en perspective du dessous, un exemple de réalisation d'un premier moyen d'immobilisation une fois solidarisé à la structure du véhicule automobile, et
- la figure 12 illustre schématiquement, dans une vue en perspective du dessous, un cordon de maintien dont la première extrémité est solidarisée à la structure du véhicule automobile.

Les dessins annexés pourront non seulement servir à compléter l'invention, mais aussi contribuer à sa définition, le cas échéant.

L'invention a pour but de proposer un dispositif de rangement destiné à être monté de façon au moins partiellement amovible dans une partie supérieure de la structure (ou caisse) d'un véhicule automobile.

Dans ce qui suit, on considère, à titre d'exemple non limitatif, que le véhicule automobile est une voiture de type monospace. Mais, l'invention n'est pas limitée à ce type de véhicule automobile.

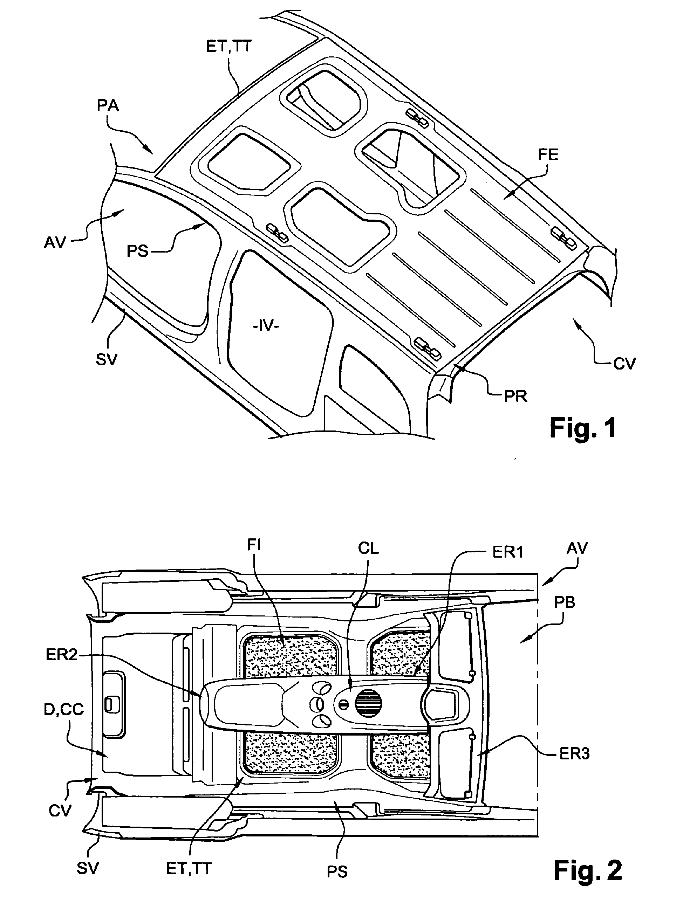

Par ailleurs, et comme illustré sur les figures 1 et 2, on considère dans ce qui suit, à titre d'exemple non limitatif, que le dispositif de rangement D, selon l'invention, est destiné à être au moins partiellement solidarisé à la partie arrière d'un ensemble de toit ET, lui-même solidarisé à la partie supérieure PS de la structure SV d'un véhicule automobile (entre le pare-brise PB et la zone de coffre CV). Mais, l'invention n'est pas limitée à ce type d'implantation. Le dispositif de rangement D, selon l'invention, peut être également (et notamment) solidarisé au toit d'un véhicule automobile.

On entend ici par « ensemble de toit ET » un ensemble comportant au moins une plaque de toit TT et une console CL préassemblés, par exemple par un équipementier automobile, et pouvant être placé en bord d'une ligne de montage afin d'être assemblé à la partie supérieure PS de la structure (ou caisse) SV d'un véhicule automobile. La plaque de toit TT est par exemple en matériau composite et comporte une face interne FI, qui est destinée à être orientée vers l'intérieur IV de la structure SV du véhicule, et une face externe FE, opposée à la face interne FI et destinée à être orientée vers l'extérieur du véhicule (et donc à être au contact de l'air extérieur). Cette plaque de toit TT peut éventuellement comporter au moins un élément de vitrage, par exemple réalisé en verre ou en matériau synthétique ou composite transparent (éventuellement teinté). La console CL est montée sur la face interne FI de la plaque de toit TT. Cette console CL est destinée à loger au moins un équipement, comme par exemple un groupe moto-ventilateur (ou GMV), destiné à fournir de l'air dans au moins une zone de l'habitacle du véhicule (et logeant éventuellement un diffuseur de parfum), et/ou des moyens d'éclairage (au moins une lampe), ainsi que leurs éventuels organes de commande.

On notera, comme illustré sur la figure 2, qu'une fois l'ensemble de toit ET solidarisé à la structure SV on peut lui adjoindre au moins un élément de rangement ERp ou un dispositif de rangement D selon l'invention et/ou au moins une garniture ou un élément d'habillage. Parmi ces éléments de rangement ERp (ici p = 1 à 3)qui peuvent être solidarisés à l'ensemble de toit ET assemblé, afin de le compléter, on peut notamment citer un élément de rangement longitudinal central ER1, un élément de rangement longitudinal arrière ER2 et un élément de rangement transversal ER3.

On entend ici par « transversale » une direction perpendiculaire à la direction longitudinale du véhicule automobile. La largeur du véhicule se détermine donc suivant sa direction transversale, tandis que la longueur du véhicule se détermine suivant sa direction longitudinale.

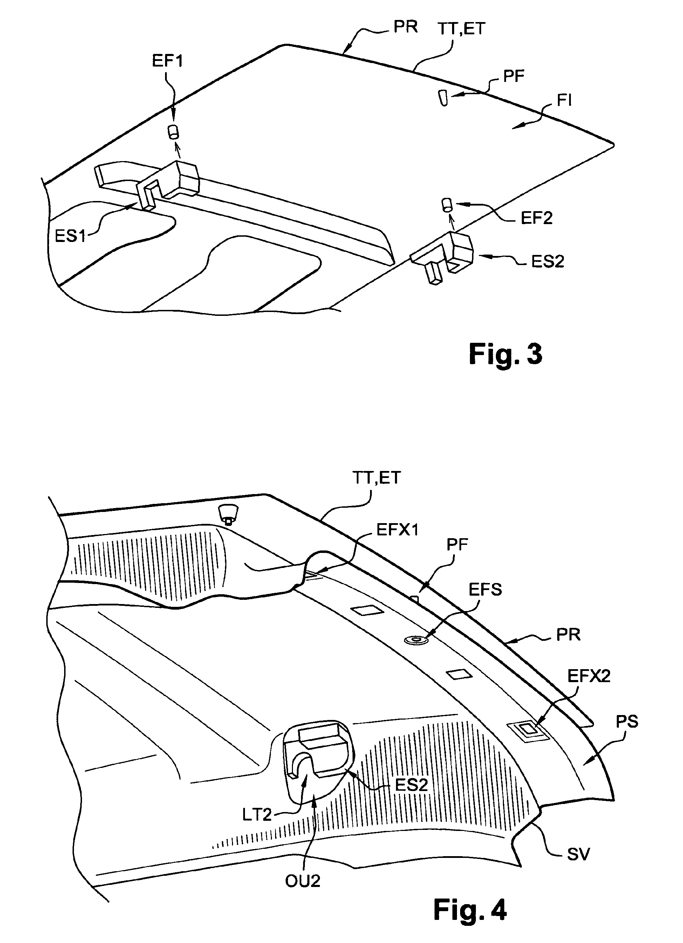

Un dispositif de rangement D, selon l'invention, comprend au moins deux éléments de support ESi (voir figures 3 à 5) et un capot CC rotatif (voir figures 2 et 6 à 10).

Comme illustré sur la figure 3, les deux éléments de support ES1 et ES2 (i = 1 ou 2) sont destinés à être solidarisés de façon amovible à une partie PR de la plaque de toit TT. Cette solidarisation peut par exemple se faire au moyen d'une ou plusieurs vis.

La partie PR de la plaque de toit TT est par exemple située au niveau de la partie supérieure PS de la zone de coffre CV (située à l'opposée du pare-brise PB). Dans l'exemple de réalisation non limitatif illustré, la face interne FI de la partie PR (arrière) est solidarisée à une face externe d'une partie arrière conformée de la structure SV. En d'autres termes, la partie arrière PR de la plaque de toit TT est située au dessus de la partie arrière conformée de la structure SV (c'est-à-dire du côté extérieur). Cette solidarisation se fait par exemple (et notamment) au moyen d'un plot de fixation PF qui est défini sur la face interne FI de la partie arrière PR et que l'on fixe à un élément de fixation EFS de la structure SV. Comme cela est partiellement illustré sur la figure 4, la partie arrière conformée de la structure SV comprend deux ouvertures OUi traversées respectivement par les deux éléments de support ESi de manière à permettre leur solidarisation ou leur démontage, ainsi que leur accessibilité en vue du support du capot CC.

Il est important de noter que les deux éléments de support ESi peuvent être soit préassemblés à la plaque de toit TT avant qu'elle ne soit solidarisée à la structure SV, soit solidarisés à la plaque de toit TT une fois qu'elle a été solidarisée à la structure SV.

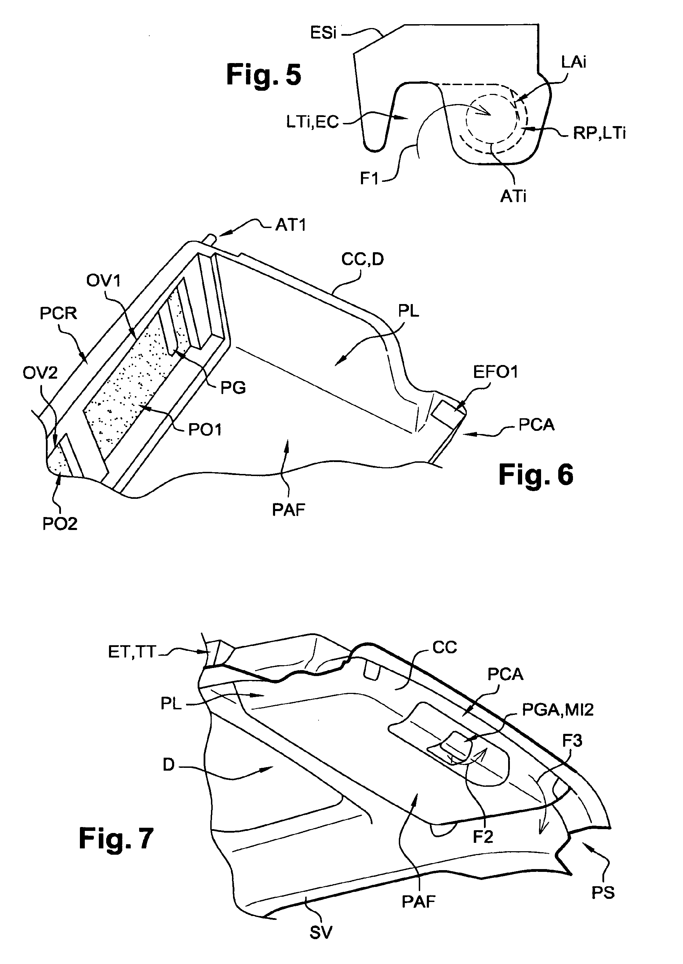

Comme cela est illustré sur les figures 4 et 5, chaque élément de support ESi comprend un logement transversal adapté LTi sur lequel on reviendra plus loin.

Le capot CC comprend une paroi avant PCA (orientée vers l'arrière de la structure SV), une paroi arrière PAR (orientée vers l'habitacle), une paroi de fond (pour supporter des objets) et deux parois latérales PL qui définissent ensemble un bac de réception d'objets. Ce capot CC est muni de deux axes transversaux ATi qui saillent sur les parties supérieures des parois latérales PL suivant une même direction mais selon des sens opposés. Ces deux axes transversaux ATi sont destinés à être logés, de façon amovible, respectivement dans les logements transversaux LTi des deux éléments de support ESi afin de permettre l'entraînement en rotation du capot CC par rapport à la plaque de toit TT.

Dans l'exemple de réalisation non limitatif illustré sur la figure 5, le logement transversal adapté LTi de chaque élément de support ESi présente une forme partiellement spiralée (également dite « en escargot »). Dans ce cas, le logement transversal adapté LTi comprend une première partie EC en forme d'encoche dans laquelle peut être introduit et guidé un axe transversal ATi, et une seconde partie RP définissant un réceptacle pour ledit axe transversal ATi. Pour loger les deux axes transversaux ATi dans les logements transversaux adaptés LTi, on soulève le capot CC de manière à introduire les deux axes transversaux ATi verticalement (de bas en haut) dans les encoches EC jusqu'à ce qu'ils parviennent en butée, puis on tire le capot CC vers l'arrière de la structure SV de sorte que ses deux axes transversaux ATi pénètrent dans le réceptacle RP, et on tire le capot CC vers le bas afin que ses deux axes transversaux ATi s'appuient sur les fonds des réceptacles RP. Le trajet d'un axe transversal ATi dans un logement transversal adapté LTi est matérialisé par la flèche F1 sur la figure 5.

On notera, comme illustré sur la figure 5, que chaque logement transversal adapté LTi peut éventuellement comporter dans son réceptacle RP une languette élastique LAi destinée à plaquer l'axe transversal ATi dans le fond dudit réceptacle RP. Cette languette LAi est destinée à limiter les bruits induits par le mouvement d'un axe transversal ATi dans son réceptacle RP en présence de secousses, vibrations ou chocs.

Lorsque l'on veut désolidariser le capot CC de la structure SV, et plus précisément des deux éléments de support ESi qui sont solidarisés à la plaque de toit TT, on pousse le capot CC vers le haut de manière à dégager ses deux axes transversaux ATi des fonds des réceptacles RP jusqu'à ce qu'ils parviennent en butée, puis on pousse le capot CC vers l'habitacle de sorte que ses deux axes transversaux ATi parviennent dans les encoches EC, et on tire le capot CC vers le bas afin que ses deux axes transversaux ATi sortent desdites encoches EC.

Afin de permettre la fermeture du capot CC, le dispositif de rangement D comprend préférentiellement des premiers MI1 et seconds MI2 moyens d'immobilisation.

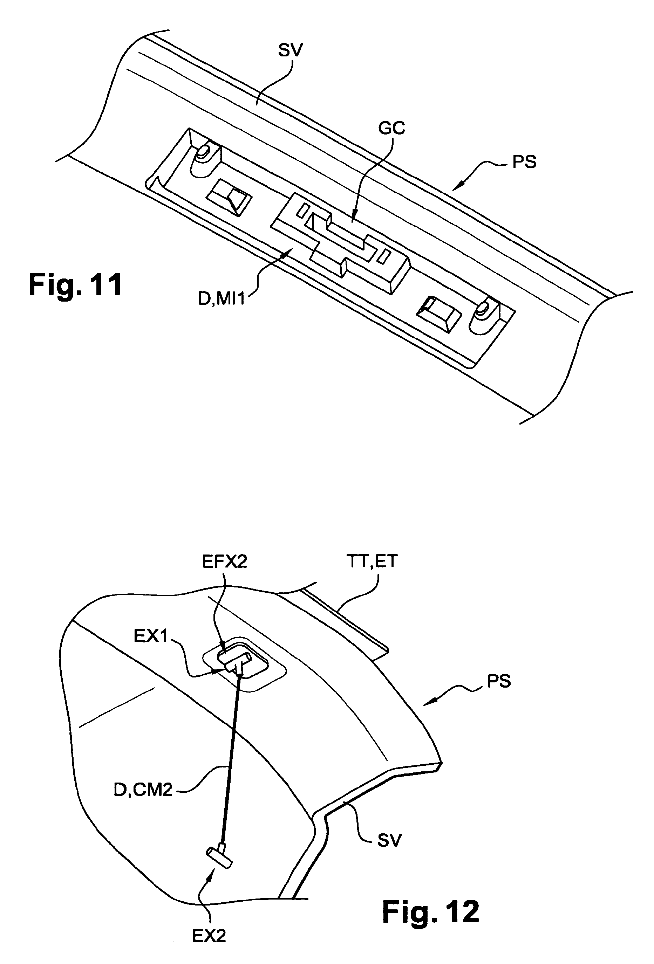

Les premiers moyens d'immobilisation MI1 peuvent être par exemple solidarisés à la partie arrière de la structure SV, comme illustré non limitativement sur la figure 11. Ils sont par exemple solidarisés à la structure SV au moyen de vis. Par exemple, et comme illustré non limitativement sur la figure 11, ils comprennent une gâche GC.

Les seconds moyens d'immobilisation MI2 sont situés dans la paroi avant PCA du capot CC. Ils comprennent par exemple un pêne (non illustré) actionnable par une poignée rotative PG (voir la flèche F2 de la figure 7) et destiné à coopérer avec la gâche GC pour immobiliser le capot CC par rapport à la structure SV. Ces moyens d'immobilisation MI2 sont donc propres à prendre une première position, dans laquelle leur pêne peut coopérer avec la gâche GC afin d'immobiliser le capot CC dans une position fermée qui interdit l'accès à l'espace interne El que ses parois PCA, PCR, PL et PAF délimitent, et une seconde position, dans laquelle leur pêne ne coopère pas avec la gâche GC (car il en est libéré), permettant ainsi l'entraînement en rotation du capot CC (voir la flèche F3 de la figure 7) et donc l'accès à son espace interne EI.

Comme cela est partiellement illustré sur la figure 12, le dispositif de rangement D peut également et éventuellement comprendre au moins un cordon (souple) CMn (et de préférence deux (n = 1 ou 2)) destiné à limiter l'entraînement en rotation du capot CC à un secteur angulaire choisi (par exemple compris entre environ 30° et 50°). A cet effet, chaque cordon CMn comporte une première extrémité EX1 (par exemple en forme de T) propre à être solidarisée à un élément de fixation EFXn de la structure SV (comportant par exemple une espèce d'encoche adaptée à l'immobilisation de la première extrémité EX1) et une seconde extrémité EX2 (par exemple en forme de T) propre à être solidarisée à un élément de fixation EFOn porté par une paroi du capot CC (par exemple une paroi latérale PL - voir figure 6) et comportant par exemple une espèce d'encoche adaptée à l'immobilisation de la seconde extrémité EX2. On comprendra que lorsque le(s) cordon(s) CMn est (sont) tendu(s), le capot CC est ouvert et se trouve supporté conjointement par les deux éléments de support ESi (via ses axes transversaux ATi) et par le(s) cordon(s) CMn.

On comprendra également que lorsque le dispositif de rangement D comprend des cordons CMn et que l'on veut désolidariser son capot CC de la structure SV, on doit dégager les premières extrémités EX1 des éléments de fixation EFXn de la structure SV et/ou les secondes extrémités EX2 des éléments de fixation EFOn du capot CC.

Comme cela est non limitativement illustré sur les figures 6, 9 et 10, le capot CC peut également et éventuellement comprendre au moins une ouverture OVj définie dans sa paroi arrière PCR, de manière à permettre à un usager d'accéder à son espace interne El de l'intérieur du véhicule automobile. Dans l'exemple illustré, la paroi arrière PCR du capot CC comprend deux ouvertures OV1 et OV2 (j = 1 ou 2).

De préférence, et comme illustré sur les figures 6, 9 et 10 chaque ouverture OVj est couplée à un moyen d'obturation POj. Ce dernier (POj) peut par exemple comprendre une plaque qui est montée dans deux glissières transversales GLkj (j = 1 ou 2, et k = 1 ou 2) définies dans des parties supérieure et inférieure de la paroi arrière PCR du capot CC afin de pouvoir coulisser transversalement (de préférence derrière ladite paroi arrière PCR).

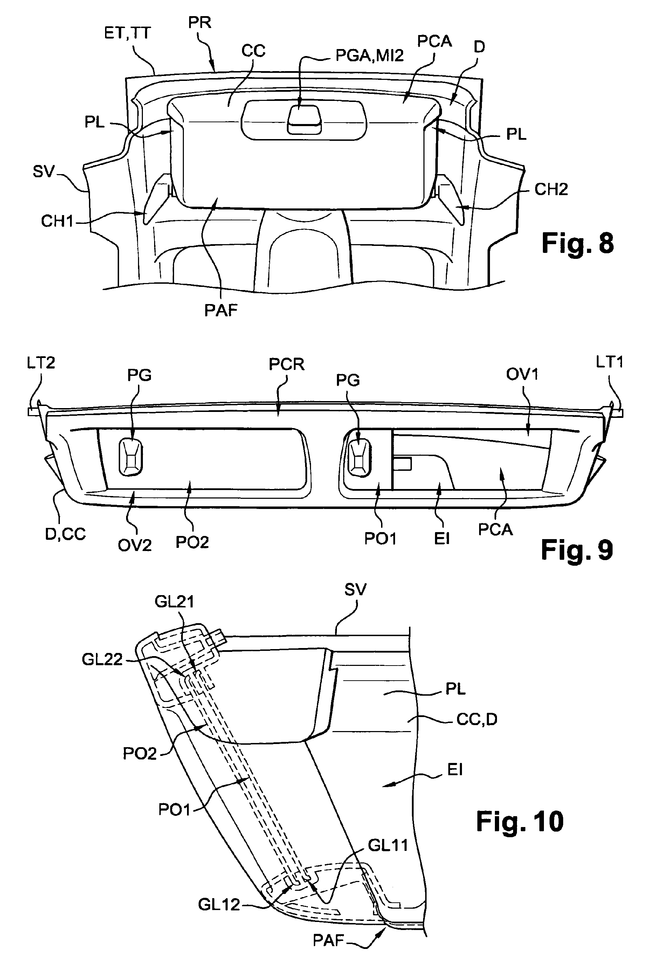

En présence de deux ouvertures OV1 et OV2 pourvues respectivement de plaques P01 et P02, les glissières inférieures GL11 et GL12 peuvent être parallèles entre elles, et les glissières supérieures GL21 et GL22 peuvent être parallèles entre elles, comme illustré sur la figure 10. Ainsi, les plaques P01 et P02 peuvent coulisser transversalement l'une derrière l'autre.

Par exemple, et comme illustré, chaque plaque POj comprend un organe de préhension PG, comme par exemple une poignée, destiné à permettre à un usager de la faire coulisser transversalement afin d'obturer complètement ou partiellement l'ouverture OVj correspondante ou bien de laisser cette dernière sensiblement complètement dégagée.

Enfin, et comme cela est non limitativement illustré sur la figure 8, le dispositif de rangement D peut également et éventuellement comprendre deux carters (ou joues) d'habillage CHi destinées à être monté(e)s sur la structure SV au niveau des deux ouvertures OUi afin de cacher respectivement les éléments de support ESi lorsqu'ils supportent le capot CC.

Il est important de noter, qu'étant donné que les éléments de support ESi du dispositif de rangement D sont logés dans des ouvertures OUi de la partie arrière de la structure SV, lorsque l'on veut désolidariser le capot CC de la structure SV, il n'est pas nécessaire de désolidariser les éléments de support ESi de la plaque de toit TT (bien que cela soit envisageable). Par conséquent, le montage et le démontage du capot CC sont particulièrement simples pour un usager, même inexpérimenté.

Il est également important de noter que l'invention peut être également considérée sous l'angle d'un procédé d'assemblage d'un dispositif de rangement D du type de celui présenté ci-avant. Ce procédé d'assemblage est défini dans la revendication 10.

L'invention ne se limite pas aux modes de mise en oeuvre de dispositif de rangement et procédés d'assemblage décrits ci-avant, seulement à titre d'exemple, mais elle englobe toutes les variantes que pourra envisager l'homme de l'art dans le cadre des revendications ci-après.

## Revendications

1. Dispositif de rangement (D) pour une structure (SV) de véhicule automobile, comprenant:
i) deux éléments de support (ESi) propres à être solidarisés de façon amovible à une partie (PR) d'une plaque de toit (TT), solidarisée à une partie supérieure (PS) de ladite structure (SV), et comprenant chacun un logement transversal adapté (LTi),
et ii) un capot (CC) définissant un bac de réception et muni de deux axes transversaux (ATi) opposés l'un à l'autre suivant une même direction et propres à être logés, de façon amovible, respectivement dans lesdits logements transversaux (LTi) de manière à permettre l'entraînement en rotation dudit capot (CC) par rapport à ladite plaque de toit (TT),
**caractérisé en ce que** chaque élément de support (ESi) comprend un logement transversal adapté (LTi) présentant une forme partiellement spiralée.

2. Dispositif selon la revendication 1, **caractérisé en ce qu'**il comprend i) des premiers moyens d'immobilisation (MI1) propres à être solidarisés à ladite structure (SV), et ii) des seconds moyens d'immobilisation (MI2) situés dans une partie avant dudit capot (CC) et propres à prendre une première position, dans laquelle ils peuvent coopérer avec lesdits premiers moyens d'immobilisation (MI1) pour immobiliser ledit capot (CC) dans une position fermée interdisant l'accès à l'espace interne qu'il délimite, et une seconde position, dans laquelle ils ne coopèrent pas avec lesdits premiers moyens d'immobilisation (MI1) en permettant l'entraînement en rotation dudit capot (CC) en vue d'accéder à son espace interne.

3. Dispositif selon l'une des revendications 1 à 2, **caractérisé en ce que** chaque logement transversal adapté (LTi) comprend une languette (LAi) agencée pour plaquer un axe transversal (ATi) qui s'y trouve logé.

4. Dispositif selon l'une des revendications 1 à 3, **caractérisé en ce que** ledit capot (CC) comprend une partie arrière (PCR) munie d'au moins une ouverture (OVj) propre à permettre un accès audit espace interne via l'intérieur du véhicule automobile.

5. Dispositif selon la revendication 4, **caractérisé en ce que** chaque ouverture (OVj) est couplée à un moyen d'obturation (POj).

6. Dispositif selon la revendication 5, **caractérisé en ce que** chaque moyen d'obturation (POj) comprend une plaque montée dans des glissières transversales (GLkj) de manière à pouvoir coulisser transversalement.

7. Dispositif selon la revendication 4, **caractérisé en ce qu'**il comprend deux ouvertures (OVj) définies l'une à côté de l'autre suivant la direction transversale et couplées à des plaques d'obturation (POj) montées dans des glissières transversales (GLkj) parallèles de manière à pouvoir coulisser transversalement l'une derrière l'autre.

8. Dispositif selon l'une des revendications 1 à 7, **caractérisé en ce qu'**il comprend au moins un cordon (CMn) comportant une première extrémité propre à être solidarisée à ladite structure (SV) et une seconde extrémité propre à être solidarisée audit capot (CC), de manière à limiter l'entraînement en rotation dudit capot (CC) à un secteur angulaire choisi.

9. Dispositif selon l'une des revendications 1 à 8, **caractérisé en ce qu'**il comprend deux carters d'habillage (CHi) propres à être montés sur ladite structure (SV) de manière à cacher respectivement lesdits éléments de support (ESi) lorsqu'ils supportent ledit capot (CC).

10. Procédé d'assemblage d'un dispositif de rangement (D) à une structure (SV) de véhicule automobile, consistant
i) à solidariser de façon amovible à une partie (PR) d'une plaque de toit (TT), solidarisée à une partie supérieure (PS) de ladite structure (SV), deux éléments de support (ESi) comprenant chacun un logement transversal adapté (LTi),
puis ii) à loger de façon amovible dans lesdits logements transversaux (LTi) deux axes transversaux (ATi) définis de façon opposée suivant une même direction sur un capot (CC), définissant un bac de réception, de sorte que ledit capot (CC) puisse être entraîné en rotation par rapport à ladite plaque de toit (TT),
**caractérisé en ce que**
iii) le logement des axes transversaux (ATi) consistant d'abord à les guider dans une première partie (EC) en forme d'encoche des logements transversaux (LTi), puis à les faire pénétrer dans une seconde partie (RP) formant réceptacle des logements transversaux (LTi).

11. Procédé selon la revendication 10, **caractérisé en ce que** l'on solidarise à ladite structure (SV) des premiers moyens d'immobilisation (MI1) propres i) à coopérer avec des seconds moyens d'immobilisation (MI2) situés dans une partie avant dudit capot (CC) pour immobiliser ledit capot (CC) dans une position fermée interdisant l'accès à l'espace interne qu'il délimite, et ii) lorsqu'ils ne coopèrent pas avec lesdits seconds moyens d'immobilisation (MI2), à permettre l'entraînement en rotation dudit capot (CC) en vue d'accéder à son espace interne.

12. Procédé selon l'une des revendications 10 ou 11, **caractérisé en ce que** l'on solidarise à ladite structure (SV) une première extrémité d'au moins un cordon (CMn) et l'on solidarise audit capot (CC) une seconde extrémité dudit cordon (CMn), de manière à limiter l'entraînement en rotation dudit capot (CC) à un secteur angulaire choisi.

13. Procédé selon l'une des revendications 10 à 12, **caractérisé en ce que** l'on solidarise à ladite structure (SV) deux carters d'habillage (CHi) destinés à cacher lesdits éléments de support (ESi) lorsqu'ils supportent ledit capot (CC).

## Patentansprüche

1. Aufbewahrungsvorrichtung (D) für eine Struktur (SV) eines Kraftfahrzeugs, umfassend:
i) zwei Trageelemente (ESi), die geeignet sind, um auf abnehmbare Weise mit einem Teil (PR) einer Dachplatte (TT) fest verbunden zu sein, die mit einem oberen Teil (PS) der Struktur (SV) fest verbunden ist und jeweils eine angepasste Querlagerung (LTi) umfasst,
und ii) eine Haube (CC), die einen Aufnahmebehälter definiert und mit zwei Querachsen (ATi) ausgestattet ist, die einander in einer gleichen Richtung gegenüber liegen und geeignet sind, um auf abnehmbare Weise jeweils in den Querlagerungen (LTi) gelagert zu sein, um die Versetzung in Drehung der Haube (CC) mit Bezug auf die Dachplatte (TT) zu ermöglichen,
**dadurch gekennzeichnet, dass** jedes Trageelement (ESi) eine angepasste Querlagerung (LTi) umfasst, die eine teilweise spiralige Form aufweist.

2. Vorrichtung nach Anspruch 1, **dadurch gekennzeichnet, dass** sie i) erste Feststeller (MI1) umfasst, die geeignet sind, um mit der Struktur (SV) fest verbunden zu sein, und ii) zweite Feststeller (MI2), die sich in einem vorderen Teil der Haube (CC) befinden und geeignet sind, um eine erste Position einzunehmen, in der sie mit den ersten Feststellern (MI1) zusammenarbeiten können, um die Haube (CC) in einer geschlossenen Position festzustellen, die den Zugriff auf den Raum, den sie begrenzt, verhindert, und einen zweiten Abschnitt, in dem sie nicht mit den ersten Feststellern (MI1) zusammenarbeiten, in dem sie die Versetzung in Drehung der Haube (CC) ermöglicht, um auf ihren inneren Raum zuzugreifen.

3. Vorrichtung nach einem der Ansprüche 1 bis 2, **dadurch gekennzeichnet, dass** jede angepasste Querlagerung (LTi) eine Lasche (LAi) umfasst, die angeordnet ist, um eine Querachse (ATi), die dort gelagert ist, anzubringen.

4. Vorrichtung nach einem der Ansprüche 1 bis 3, **dadurch gekennzeichnet, dass** die Haube (CC) einen hinteren Teil (PCR) umfasst, der mit mindestens einer Öffnung (OVj) ausgestattet ist, die geeignet ist, um einen Zugriff auf den inneren Raum über die Innenseite des Kraftfahrzeugs zu ermöglichen.

5. Vorrichtung nach Anspruch 4, **dadurch gekennzeichnet, dass** jede Öffnung (OVj) mit einem Verschlussmittel (POj) gekoppelt ist.

6. Vorrichtung nach Anspruch 5, **dadurch gekennzeichnet, dass** jedes Verschlussmittel (POj) eine Platte umfasst, die in Quergleitern (GLkj) montiert ist, um quer gleiten zu können.

7. Vorrichtung nach Anspruch 4, **dadurch gekennzeichnet, dass** sie zwei Öffnungen (OVj) umfasst, die nebeneinander gemäß einer Querrichtung definiert und an Verschlussplatten (POj) gekoppelt sind, die in parallelen Quergleitern (GLkj) montiert sind, um quer hintereinander gleiten zu können.

8. Vorrichtung nach einem der Ansprüche 1 bis 7, **dadurch gekennzeichnet, dass** sie mindestens eine Leine (CMn) umfasst, die ein erstes Ende aufweist, das geeignet ist, um mit der Struktur (SV) fest verbunden zu sein, und ein zweites Ende, das geeignet ist, um mit der Haube (CC) fest verbunden zu sein, um die Versetzung in Drehung der Haube (CC) auf einen gewählten Winkelabschnitt zu begrenzen.

9. Vorrichtung nach einem der Ansprüche 1 bis 8, **dadurch gekennzeichnet, dass** sie zwei Verkleidungsgehäuse (CHi) umfasst, die geeignet sind, um auf der Struktur (SV) montiert zu sein, um jeweils die Trageelemente (ESi) zu verbergen, wenn sie die Haube (CC) tragen.

10. Verfahren zum Zusammenbau einer Aufbewahrungsvorrichtung (D) an eine Struktur (SV) eines Kraftfahrzeugs, bestehend aus:
i) feste Verbindung auf abnehmbare Weise mit einem Teil (PR) einer Dachplatte (TT), die mit einem oberen Teil (PS) der Struktur (SV) fest verbunden ist, wobei zwei Trageelemente (ESi) jeweils eine angepasste Querlagerung (LTi) umfassen,
dann ii) Lagerung auf abnehmbare Weise in den Querlagerungen (LTi) von zwei Querachsen (ATi), die auf entgegengesetzte Weise gemäß einer gleichen Richtung auf einer Haube (CC) definiert sind, die einen Aufnahmebehälter definiert, so dass die Haube (CC) mit Bezug auf die Dachplatte (TT) in Drehung versetzt werden kann,
**dadurch gekennzeichnet, dass**
iii) die Lagerung der Querachsen (ATi) zunächst darin besteht, sie in einem ersten Teil (EC) in Form eines Schlitzes der Queraufnahmen (LTi) zu führen, dann, sie in einen zweiten Teil (RP) eindringen zu lassen, der einen Behälter der Queraufnahmen (LTi) bildet.

11. Verfahren nach Anspruch 10, **dadurch gekennzeichnet, dass** an die Struktur (SV) erste Feststeller (MI1) fest verbunden werden, die geeignet sind um i) mit zweiten Feststellern (MI2) zusammenzuarbeiten, die sich in einem vorderen Teil der Haube (CC) befinden um die Haube (CC) in einer geschlossenen Position festzustellen, die den Zugriff auf den Raum, den sie begrenzt, verhindert, und ii), wenn sie nicht mit den zweiten Feststellern (MI2) zusammenarbeiten, die Versetzung in Drehung der Haube (CC) zu ermöglichen, um auf ihren inneren Raum zuzugreifen.

12. Verfahren nach einem der Ansprüche 10 oder 11, **dadurch gekennzeichnet, dass** mit der Struktur (SV) ein erstes Ende mindestens einer Leine (CMn) fest verbunden und mit der Haube (CC) ein zweites Ende der Leine (CMn) fest verbunden wird, um die Versetzung in Drehung der Haube (CC) auf einen gewählten Winkelabschnitt zu begrenzen.

13. Verfahren nach einem der Ansprüche 10 bis 12, **dadurch gekennzeichnet, dass** mit der Struktur (SV) zwei Verkleidungsgehäuse (CHi) fest verbunden werden, die ausgelegt sind, um die Trageelemente (ESi) zu verbergen, wenn sie die Haube (CC) tragen.

## Claims

1. Storage device (D) for a structure (SV) of a motor vehicle, comprising:
i) two supporting elements (ESi) able to be removably integrated with a portion (PR) of a roof plate (TT), integrated to an upper portion (PS) of said structure (SV), and each comprising an adapted transversal housing (LTi),
and ii) a cover (CC) defining a reception tank and provided with two transversal axes (ATi) arranged opposite to each other along the same direction and able to be housed, removably, respectively in said transversal housings (LTi) in such a way as to allow the driving in rotation of said cover (CC) with respect to said roof plate (TT), **characterised in that** each supporting element (ESi) comprises an adapted transversal housing (LTi) having a partially spiralled shape.

2. Device according to claim 1, **characterised in that** it comprises i) a first means of immobilisation (MI1) able to be integrated to said structure (SV), and ii) second means of immobilisation (MI2) located in a front portion of said cover (CC) and able to take a first position, wherein they can cooperate with said first means of immobilisation (MI1) in order to immobilise said cover (CC) in a closed position that prohibits access to the internal space that it delimits, and a second position, wherein they do not cooperate with said first means of immobilisation (MI1) by allowing for the driving in rotation of said cover (CC) for the purpose of accessing its internal space.

3. Device according to one of claims 1 to 2, **characterised in that** each adapted transversal housing (LTi) comprises a tab (LAi) arranged to press a transversal axis (ATi) that is housed therein.

4. Device according to one of claims 1 to 3, **characterised in that** said cover (CC) comprises a rear portion (PCR) provided with at least one opening (OVj) able to allow access to said internal space via the inside of the motor vehicle.

5. Device according to claim 4, **characterised in that** each opening (OVj) is coupled to a sealing means (POj).

6. Device according to claim 5, **characterised in that** each sealing means (POj) comprises a plate mounted in transversal slides (GLkj) in such a way as to be able to slide transversally.

7. Device according to claim 4, **characterised in that** it comprises two openings (OVj) defined one next to the other along the transversal direction and coupled to sealing plates (POj) mounted in parallel transversal slides (GLkj) in such a way as to be able to slide transversally one behind the other.

8. Device according to one of claims 1 to 7, **characterised in that** it comprises at least one cord (CMn) comprising a first end able to be integrated to said structure (SV) and a second end able to be integrated to said cover (CC), in such a way as to limit the driving in rotation of said cover (CC) to a chosen angular sector.

9. Device according to one of claims 1 to 8, **characterised in that** it comprises two trim casings (CHi) able to be mounted on said structure (SV) in such a way as to respectively conceal said supporting elements (ESi) when they are supporting said cover (CC).

10. Method for assembling a storage device (D) to a structure (SV) of a motor vehicle, consisting in
i) removably integrating to a portion (PR) of a roof plate (TT), integrated to an upper portion (PS) of said structure (SV), two supporting elements (ESi) each comprising an adapted transversal housing (LTi),
then ii) removably housing in said transversal housings (LTi) two transversal axes (ATi) defined oppositely along the same direction on a cover (CC), defining a reception tank, in such a way that said cover (CC) can be driven in rotation with respect to said roof plate (TT),
**characterised in that**
iii) the housing of the transversal axes (ATi) firstly consisting in guiding them into a first portion (EC) in the form of a notch of the transversal housings (LTi), then having them penetrate into a second portion (RP) forming a receptacle of the transversal housings (LTi).

11. Method according to claim 10, **characterised in that** said structure (SV) is made integral with first means of immobilisation (MI1) able to i) cooperate with second means of immobilisation (MI2) located in a front portion of said cover (CC) in order to immobilise said cover (CC) in a closed position that prohibits access to the internal space that it delimits, and ii) when they do not cooperate with said second means of immobilisation (MI2), allow for the driving in rotation of said cover (CC) for the purpose of accessing its internal space.

12. Method according to one of claims 10 or 11, **characterised in that** said structure (SV) is made integral with a first end of at least one cord (CMn) and a second end of said cord (CMn) is made integral with said cover (CC), in such a way as to limit the driving in rotation of said cover (CC) to a chosen angular sector.

13. Method according to one of claims 10 to 12, **characterised in that** said structure (SV) is made integral with two trim casings (CHi) intended to conceal said supporting elements (ESi) when they are supporting said cover (CC).
